# EUROPEAN PATENT APPLICATION

(11) **EP 2 085 261 A1**
(43) Date of publication of application: **05.08.2009**
(21) Application number: 08425052.1
(22) Date of filing: 31.01.2008
(51) Int. Cl.: B60K 15/04

(54) **Device for closing a tank automatically**

(71) Applicant: F.A.R.M.A. S.r.l. Fabbrica Accessori Ricambi Moto E Auto, 40059 Medicina, Frazione Fossatone (BO) (IT)
(72) Inventor: Mainardi Franco, 40062 Molinella (IT)
(74) Representative: Modiano, Micaela Nadia

(57) **Abstract**

A device for closing a tank, comprising a substantially disk-like body (2) which can be fixed to a filler (3) of a tank to close a chamber (4) delimited by the tank. The body (2) is perforated, so as to form a passage port (7) for the insertion of a nozzle (6) for filling the tank; the body (2) further accommodates a cover (8), which is elastically articulated to the body (2) about a first rotation axis (A) which is parallel to the plane of arrangement of the body (2). The cover (8) can move elastically for detachable mating with the internal inlet of the port (7), in order to obtain the hermetic seal between the cover (8) and the port (7). The cover (8) has a substantially flat annular portion (8a) which abuts against a shoulder (7a) which is formed at the internal inlet of the port (7), in order to close the tank; a gasket (9) is interposed between the annular portion (8a) and the shoulder (7a) and is fixed to the shoulder (7a).

## Description

The present invention relates to a device for closing a tank automatically.

Among the technical prescriptions provided for fixing the cap to the filling tube of the tank for liquids for the propulsion of vehicles, the directive 70/221/EC, recently modified by 2008/8/EC, provides that it is possible to approve only tanks in which measures have been taken in order to limit emissions caused by evaporation and to avoid accidental leakage of fuel even if the vehicle is overturned.

Caps for closing the filler of tanks are therefore known in which a portion of the cap is capable of providing a shape mating with a gasket which is fixed to a corresponding inlet formed on the filler, thus achieving the hermetic closure of the tank.

The cap, which is articulated to the filler, is kept pressed against the gasket by a preloaded torsion spring; in this manner, the cap is normally arranged so as to close the tank. In order to comply with the statutory provisions cited above, the presence of an elastic means, such as the spring, allows automatic reclosure after extracting the nozzle.

However, this mating is not free from drawbacks; the correct seal is in fact ensured only in case of a precise shape match between the involved surfaces of the cap and of the gasket, which for example are both frustum-shaped. Accordingly, any permanent deformation of the gasket, caused for example by the normal deterioration of its elastic characteristics over time, causes loss of the desired hermetic seal, with the consequent risk of emission into the outside environment of vapors or of the fuel itself.

The hermetic seal can also be compromised for example as a consequence of the repeated insertion of the nozzle in the filler over time. The manner in which the nozzle is inserted in fact causes said nozzle to bear and rest always on the same portion of the inlet of the filler: therefore, over time one runs the risk of a progressive misalignment between said inlet and the cap, with consequent impossibility to provide correct mating.

The aim of the present invention is to solve the above-mentioned problems, by providing a closure device in which the sealing function of the hermetic closure has characteristics of high reliability over time, even in case of any wear and plays that might occur between the mated parts.

Within this aim, an object of the present invention is to provide a closure device which allows to compensate for any overpressures or pressures which exceed the operating pressures in compliance with the applicable statutory provisions.

Another object of the invention is to provide a closure device provided with means for reducing the concentration of pollutants contained in fuel vapors.

Another object of the invention is to provide a closure device which can be easily obtained starting from commonly commercially available elements and materials.

Another object of the invention is to provide a closure device which has a low cost, is relatively simple to provide in practice and is safe in application.

This aim and these and other objects which will become better apparent hereinafter are achieved by a device for closing a tank, which comprises a substantially disk-like body which can be fixed to a filler of a tank to close the chamber delimited by said tank, said body being perforated, so as to form a passage port for the insertion of a nozzle for filling the tank, said body accommodating a cover, which is elastically articulated to said body about a first rotation axis which is parallel to the plane of arrangement of said body, said cover being elastically movable for detachable mating with the internal inlet of said port, for the hermetic seal between said cover and said port, characterized in that said cover has a substantially flat annular portion, said annular portion abutting against a shoulder which is formed at said internal inlet of said port, in order to close the tank, a gasket being interposed between said annular portion and said shoulder and being fixed to said shoulder.

Further characteristics and advantages of the invention will become better apparent from the following detailed description of six preferred but not exclusive embodiments of the closure device according to the invention, illustrated by way of non-limiting example in the accompanying drawings, wherein:

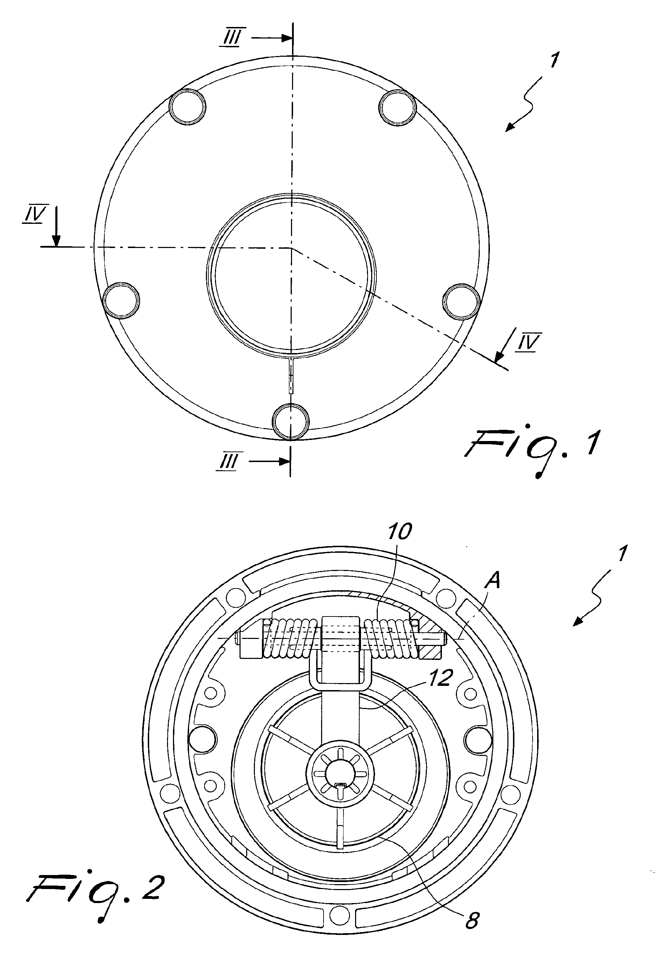

Figure 1 is a head-on front view of a closure device according to the invention in a first embodiment;
Figure 2 is a head-on rear view of the device according to the invention;
Figure 3 is a sectional view of Figure 1, taken along the line III-III;
Figure 4 is a sectional view of Figure 1, taken along the line IV-IV;
Figure 5 is a head-on rear view of the closure device according to the invention in a second embodiment;
Figure 6 is a sectional view of Figure 5, taken along the line VI-VI;
Figure 7 is a sectional view of Figure 5, taken along the line VII-VII;
Figure 8 is a head-on rear front view of the closure device according to the invention in a third embodiment;
Figure 9 is a sectional view of Figure 8, taken along the line IX-IX;

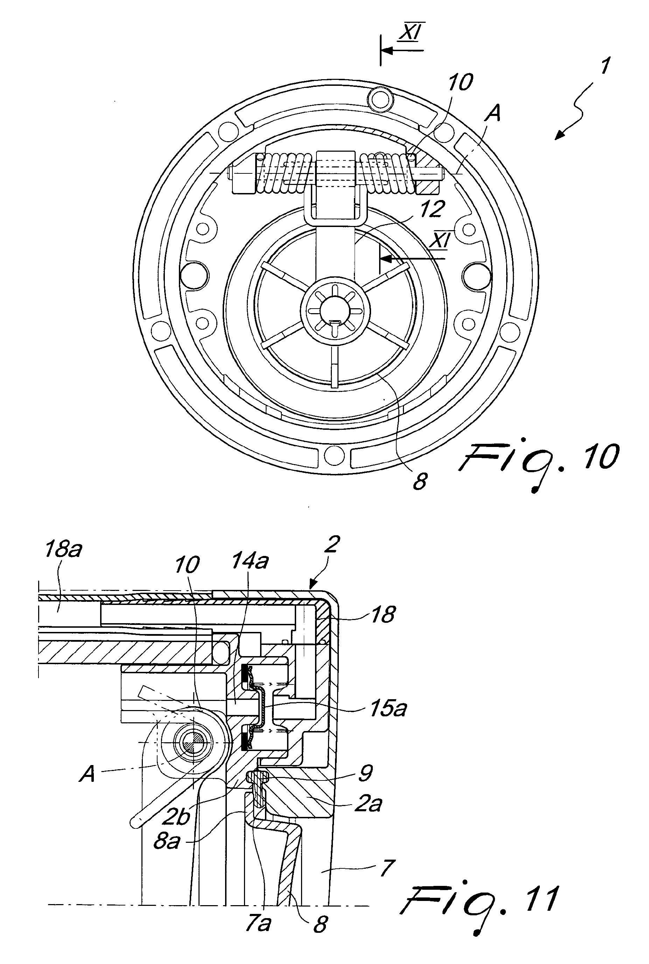

Figure 10 is a head-on rear view of the closure device according to the invention in a fourth embodiment;
Figure 11 is a sectional view of Figure 10, taken along the line XI-XI;
Figure 12 is a head-on front view of the closure device according to the invention in a fifth embodiment;
Figure 13 is a sectional view of Figure 12, taken along the line XIII-XIII;
Figure 14 is a head-on front view of the closure device according to the invention in a sixth embodiment;
Figure 15 is a sectional view of Figure 14, taken along the line XV-XV.

With reference to the figures, a closure device according to the invention, generally designated by the reference numeral 1, comprises a body 2, which has a substantially disk-like shape and can be fixed to a filler 3 of a tank, so as to close a chamber 4 arranged inside the tank, intended for example to contain combustible liquid to be sent to the engine of a vehicle for its propulsion.

More particularly, the body 2 comprises a first part 2a and a second part 2b, which have different shapes and are mated rigidly, along respective complementary surfaces, for example by way of fixing screws 2c.

In turn, the body 2 thus composed can be fixed to the filler 3 by means of a plurality of connecting screws 5 (for example five, as in the accompanying figures), to be inserted in suitable openings angularly and uniformly arranged on the body 2, and in female threads which can be coupled thereto and are formed on the filler 3; according to an alternative solution, shown in the accompanying figures, the connecting screws 5 are self-threading and engage in holes formed in the port 3.

In the continuation of the present description, except where required by descriptive clarity, no specific reference shall be made to the first part 2a and/or to the second part 2b, but the body 2 to which they belong shall be referenced.

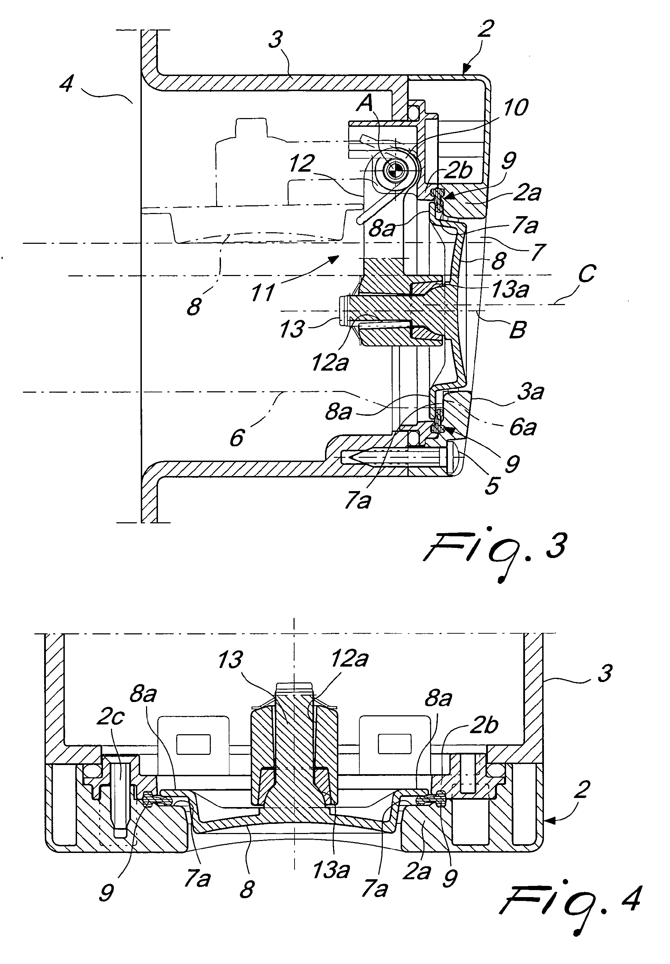

In order to allow the insertion of a nozzle 6, whose profile is shown in dot-and-dash lines in Figures 3, 13 and 15, and which is intended to fill the tank, the body 2 is perforated, thus forming a passage port 7.

The body 2 accommodates a cover 8, which is elastically articulated to the body 2 along a first rotation axis A which is substantially parallel to the plane of arrangement of said body. When the nozzle 6 is not inserted, the cover 8 is elastically forced with pressure against the body 2, detachably mating with the internal inlet of the port 7, thus providing the hermetic seal between the port 7 and the cover 8. Vice versa, the insertion of the nozzle 8 causes the rotation, about the first rotation axis A, of the cover 8, which is thus arranged in the position indicated in dot-and-dash lines in Figures 3, 13 and 15, in order to allow the filling of the tank.

According to the invention, the cover 8 has an annular portion 8a, which is substantially flat and abuts, in order to close the tank, against a shoulder 7a which is formed on the internal inlet of the port 7. Between the annular portion 8a and the shoulder 7a, there is an interposed gasket 9, which is compressed by the cover 8 when said cover is mated with the port 7, in order to achieve the desired hermetic seal.

In order to achieve the chosen elastic articulation of the cover 8 to the body 2, the device 1 comprises a torsion spring 10, whose elastic reaction is such as to force the cover 8 on the gasket 9: in this manner, the provided mating ensures the necessary hermetic seal by way of the elastic deformation of the gasket 9, which is compressed, instead of by means of a simple shape mating, which is used in the apparatuses of the background art. Accordingly, any permanent deformation of the gasket 9 does not compromise the hermetic nature of the closure, achieving the intended aim.

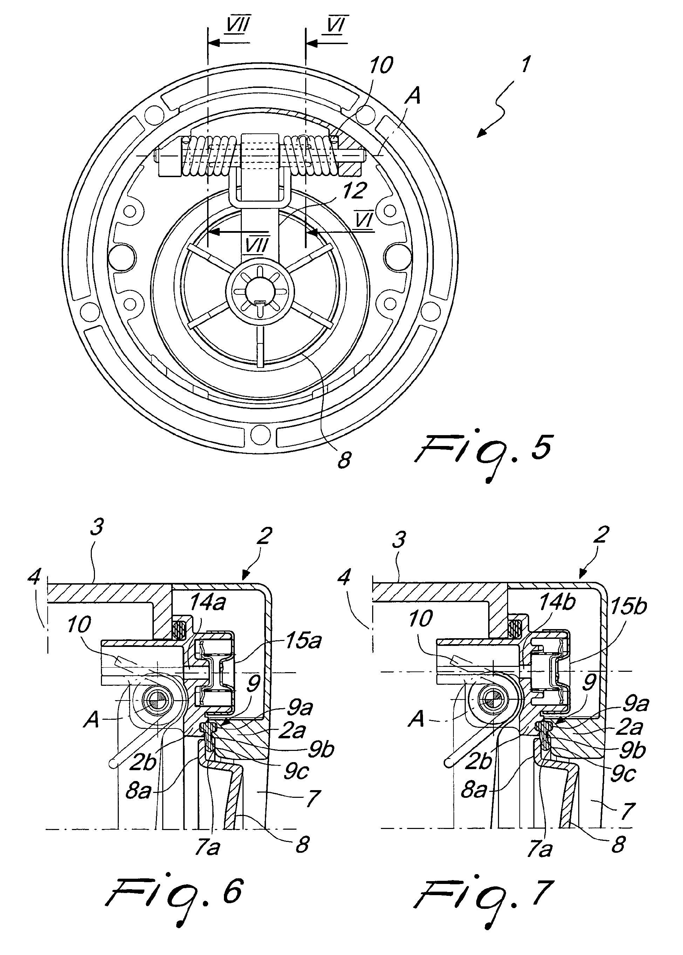

The gasket 9, as shown in particular in Figures 6 and 7, has a first end portion 9a, which is connected to a second end portion 9c through a central connecting portion 9b.

The first end portion 9a is clamped between the first part 2a and the second part 2b, in order to ensure the fixing of the gasket 9 to the body 2 (the end portion 9a is therefore substantially annular). The second end portion 9c, which is substantially curved, is compressed by the annular portion 8a of the cover 8 on the shoulder 7a of the port 7.

In order to obtain the desired hermetic seal between the cover 8 and the port 7, the end portion 9c is thicker than the adjacent central connecting portion 9b.

Advantageously, the closure device 1 according to the invention comprises means 11 for adjusting the mating between the cover 8 and the port 7, by means of which any misalignments between the two units involved are compensated during assembly.

In particular, the adjustment means 11 comprise a seat which is articulated to the body 2 and is adapted for adjustable mating, according to infinite configurations, with the cover 8. In this manner, the fastening of the cover 8 on said seat, to be performed during the assembly of the device 1 according to the invention, allows conveniently to compensate for the possible above cited misalignments.

In greater detail, as clearly shown for example in Figure 3, the adjustment means 11 comprise a bar 12, which constitutes said seat and is articulated at one of its ends to the body 2 and has, at its other end, a hole 12a, in which a stem 13, which supports the cover 8, is inserted.

A section 13a of the stem 13 is cambered in order to mate with a respective end of the hole 12a (which is substantially goblet-shaped): the resulting mating allows small sliding movements, during the fastening of the stem 13 in the hole 12a, which allow to compensate, during assembly, any misalignments between the cover 8 and the port 7.

With particular reference to Figures 3, 13 and 15, the stem 13 has a first axis of symmetry B, while the port 7 has a second axis of symmetry C; in the closed configuration of the port 7, the first axis of symmetry B and the second axis of symmetry C are substantially parallel, so as to form a predefined center distance (eccentricity).

The resulting eccentricity facilitates correct mating between the cover 8 and the port 7; more specifically, it allows better mating during the rotation of the stem 13 and of the cover 8 about the first rotation axis A, in order to close the port 7.

In fact, in the absence of eccentricity, interferences would inevitably occur in the final part of the approach stroke between the body 2 and the cover 8 which are at that point close, with unwanted consequent sliding to achieve mating and closure of the port 7. Vice versa, the presence of such center distance allows the cover 8, in the final steps of the closure stroke, to move toward the port 7 with a substantially translational motion, thus avoiding unwanted sliding and impacts.

Conveniently, the closure device 1 according to the invention comprises means for controlling the pressure that can be detected in the chamber 4 of the tank; said control means can be activated, if dangerous conditions occur, in order to restore in the chamber 4 the normal operating pressure, which can depend on the type and size of the tank, and which must adapt to the safety requirements that the device 1 must ensure.

A first danger condition occurs if the pressure inside the chamber 4 is higher than the operating pressure by at least one first preset increment: this is a situation which can occur in case of high external temperatures, which can indeed lead to a dangerous rise in the pressure of the chamber 4. Currently applicable statutory provisions (particularly directive 70/221/EC, recently modified by 2008/8/EC) require, in cases like this, the presence of devices capable of eliminating overpressures.

A second danger condition occurs if the pressure within the chamber 4 is lower than the operating pressure by at least one first preset decrement: this possibility can be observed as a consequence of normal operation due to the drawing of fuel by the engine.

More particularly, according to a first constructive solution, on the body 2 there is a first through duct 14a, which connects the chamber 4 of the tank to the outside environment.

The control means comprise therefore a control valve (of the double-acting type), which is normally arranged so as to close the first through duct 14a: the occurrence of the first danger condition or of the second danger condition causes the opening of the control valve, thus placing the outside environment in contact with the chamber 4, which is returned to the operating pressure.

According to an embodiment of substantial practical interest, which however does not limit the application of the invention, the first through duct 14a and a second through duct 14b are instead provided on the body 2: as shown in particular by Figures 6 and 7, both connect the chamber 4 of the tank to the outside environment.

The control means thus comprise a first single-acting valve 15a and a second single-acting valve 15b, both of which are normally arranged so as to close respectively the first through duct 14a and the second through duct 14b.

The occurrence of the first danger condition opens the first single-acting valve 15a (which is in practice a vent valve), allowing to eliminate the overpressure that occurs within the chamber 4, which is connected to the outside environment by means of the first through duct 14a.

Likewise, the occurrence of the second danger condition opens the second single-acting valve 15b (which is a suction valve), allowing to restore the normal operating pressure within the chamber 4, which is connected to the outside environment by means of the second through duct 14b.

In order to obviate a possible malfunction of the control means, the safety device 1 according to the invention can comprise safety means 16 for restoring the operating pressure within the chamber 4. The safety means 16 are indeed activated in case of a malfunction of the control means, for example in the case of an obstruction provided along the first through duct 14a which does not allow to connect the chamber 4 to the outside environment, with the risk of seeing the overpressure inside the tank rise dangerously.

In particular, on the body 2 there is a first additional duct 17, also provided so as to connect the chamber 4 of the tank to the outside environment.

According to an embodiment of substantial practical interest, the safety means 16 comprise a safety valve (also of the double-acting type), which can be normally arranged so as to close a first duct which is connected to a first end portion 17a of the first additional duct 17: if the pressure of the chamber 4 reaches a value which exceeds the operating value by at least one second preset increment or a value which is lower by at least one second preset decrement, the safety valve is arranged so as to connect the chamber 4 to the outside environment, in order to restore the correct pressure value inside the chamber 4.

The first duct preferably has a considerable length, in order to maintain a substantial separation distance between said safety valve and the tank, so that any impurities that exit from the tank cannot contaminate and/or block the double-acting valve.

The second preset increment is conveniently greater than the first one, so as to cause the activation of the safety means 16 only in case of malfunction of the control means if the first danger condition occurs.

Likewise, the second preset decrement is greater than the first one, again so as to cause the activation of the safety means 16 only in case of malfunction of the control means if the second danger condition occurs.

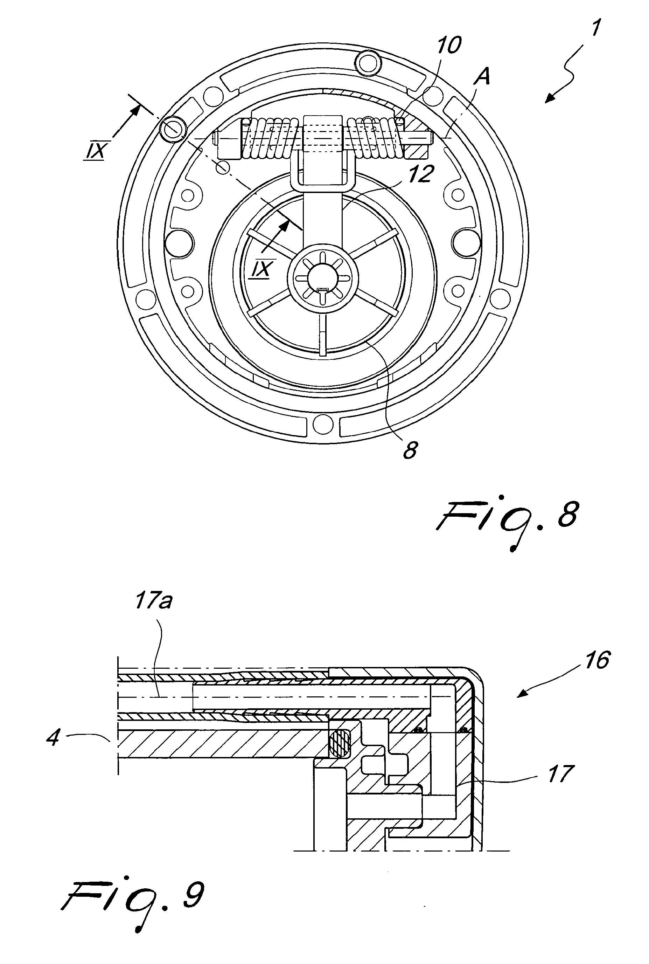

According to a third solution, shown in Figures 8 and 9, the safety means 16 instead comprise a third single-acting valve, which is normally arranged so as to close the first duct, which is connected to the first end portion 17a of the first additional duct 17: the third valve is arranged so as to connect the chamber 4 to the outside environment only if the pressure of the chamber 4 reaches a value which is higher than the operating value by at least the second preset increment (which is greater than the first increment) in order to eliminate the overpressure.

In order to avoid problems linked to negative pressures occurring within the tank and not eliminated by way of the control means, the control means can also comprise a fourth single-acting valve, which is normally arranged so as to close a second duct which is connected to a second end portion of a second additional duct: the fourth valve is arranged so as to connect the chamber 4 to the outside environment only if the pressure of the chamber 4 reaches a value which is lower than the operating value by at least the second preset decrement (greater than the first one) in order to eliminate the negative pressure.

Advantageously, the body 2 comprises a channel 18, which is arranged in series to the first through duct 14a and leads, by means of its third end portion 18a, to a circuit provided with the means for absorbing the pollutants that can be present in the vapors emitted by the fuel contained in the chamber 4 of the tank.

As described in the previous paragraphs, the first through duct 14a in fact allows to eliminate any overpressures that occur in the chamber 4 by connecting it to the outside environment. Accordingly, the vapors of the fuel generated inside the tank during normal operation are released into the outside environment.

In order to reduce the content of pollutants, therefore, the vapor comes into contact, before reaching the outside environment, with absorption means, which comprise for example an activated-charcoal filter arranged along the channel 18 which is crossed by the vapors before they arrive outside.

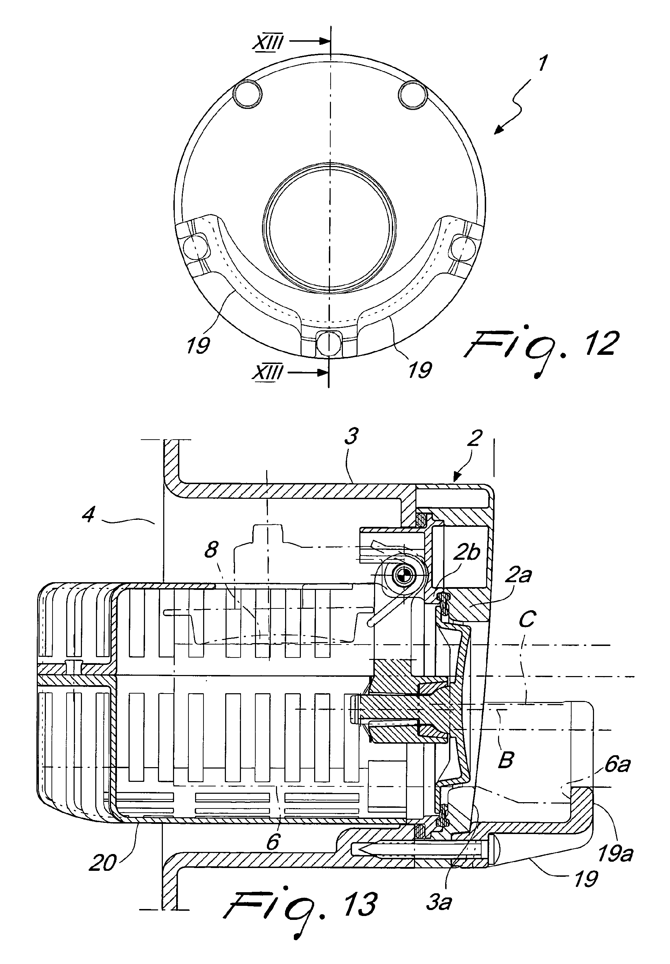

With particular reference to Figures 12 and 13, the closure device 1 according to the invention can be provided with a protrusion 19 which lies outside the body 2 and has an abutment 19a for mating with a tooth 6a of the nozzle 6, which is thus detachably fixed on the protrusion 19 during the tank filling operations, so as to not require the presence of the operator.

It should be noted that as a consequence of the presence of the protrusion 19, during the filling operations the nozzle 6 is kept in a substantially further extracted position and therefore is only partially inserted in the filler 3, differently from what occurs in the solutions of the

### background art.

In fact, in the background art and in the solution of Figure 3, the coupling of the nozzle 6 to the filler 3 occurs by means of the tooth 6a of the nozzle 6, which provides a shape mating with a respective abutment 3a formed along the outer inlet of the filler 3; as shown clearly by the comparison of Figures 3 and 13, in this case the resulting configuration corresponds to a deeper insertion of the nozzle 6 in the filler 3.

The closure device 1 according to the invention, and the presence of the protrusion 19 in particular, thus allow to use per se known anti-siphoning apparatuses, such as a mesh 20, which are shorter than standard meshes, offering an important advantage against the risk of attempted fuel theft.

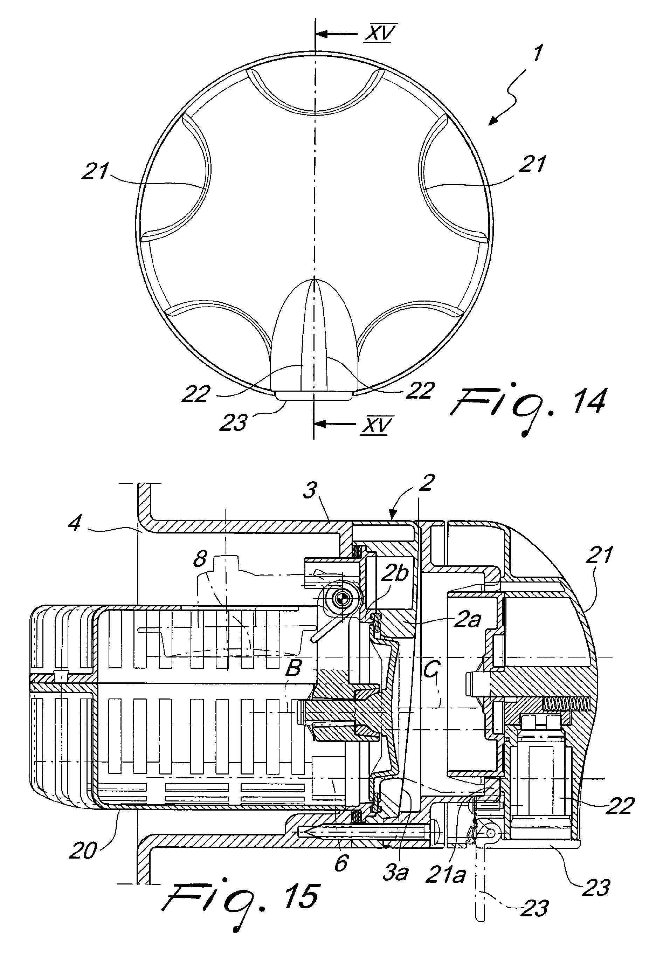

It is in fact known that anti-siphoning devices are constituted substantially by the mesh 20, such as the one shown in Figures 13 and 15, which hinders an attempt to insert a hose by means of which the fuel contained in the tank is to be aspirated.

The hose can be inserted only by an extent which corresponds to the length of the mesh 20, which in any case must be sized so as to allow the insertion of the nozzle 6 for fueling.

The closure device 1 according to the invention, by being able to use a small mesh 20, is thus more protected against fraudulent attempts to remove fuel, offering a shorter stroke for the insertion of a suction hose.

Finally, it is possible to complete the device 1 with a dome 21, to be arranged outside the body 2, substantially covering it, by mating with a protrusion 21a, as a further protection against attempts to access the tank. The protrusion 21a, once the dome 21 has been removed to proceed with fueling, allows the nozzle 6 to rest in a substantially extracted configuration, thus achieving the same advantages achieved with the protrusion 19.

If one wishes to protect oneself not only against attempted fuel theft but also against the possible insertion of substances such as sugar or the like in the tank, or more generally to prevent access to the inside of the filler 3, the dome 21 has a block 22 for the insertion of a key with which the dome 21 is locked on the body 2.

As shown by Figure 15, a plate 23 is articulated to the dome 21 and is normally arranged so as to close the block 22 and is capable of rotating in order to be arranged in the position shown in dot-and-dash lines to allow the insertion of the key.

The operation of the closure device according to the invention, in the various described embodiments, is evident from what has been described and illustrated, and in particular it is evident that the torsion spring 10 makes the annular portion 8a of the cover 8 press against the shoulder 7a, compressing the gasket 9 interposed between them; the provided mating thus ensures the perfect seal between the cover 8 and the port 7 even following small deformations of the gasket 9 or mutual movements of the involved elements.

The various described embodiments, in addition to ensuring a hermetic seal, have elements which are capable of performing various supplemental functions.

In particular, the control means allow to eliminate dangerous pressure variations occurring within the tank (due to normal operation or particular operating conditions); this is allowed by the opening of a double-acting control valve or of the first and second single-acting valves 15a, 15b, which are arranged on the first through duct 14a or on the second through duct 14b and connect said tank to the outside environment.

In order to respond to a possible malfunction of the control means, if therefore said means are unable to eliminate the overpressure or partial vacuum that may have formed within the chamber 4, it is possible to provide the device 1 with safety means 16, to be arranged on a further additional first duct 17, which is also capable of connecting the chamber 4 to the outside environment, in order to restore the normal operating pressure.

The use of means for absorbing pollutants, such as for example activated-charcoal filters to be arranged along the channel 18, arranged in series to the first through duct 14a, further allows to reduce the content of pollutants that are present in the vapors emitted outward during elimination of overpressure.

Finally, as extensively described earlier, the protrusion 19 and the dome 21 (with the protrusion 21a) ensure that the closure device 1 according to the invention is protected against attempts to remove the fuel contained in the tank and against the insertion of substances which damage the correct operation of the engine.

In practice it has been found that the closure device according to the invention fully achieves the intended aim and objects, since the particular mating that is provided, achieved by way of the compression of the gasket interposed between the annular portion of the cover and the shoulder formed at the internal inlet of the port, ensures perfect tightness even following wear and plays which might develop over time between the parts involved.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for closing a tank, comprising a substantially disk-like body (2) which can be fixed to a filler (3) of a tank to close a chamber (4) delimited by said tank, said body (2) being perforated, so as to form a passage port (7) for the insertion of a nozzle (6) for filling the tank, said body (2) accommodating a cover (8), which is elastically articulated to said body (2) about a first rotation axis (A) which is parallel to the plane of arrangement of said body (2), said cover (8) being elastically movable for detachable mating with the internal inlet of said port (7), for the hermetic seal between said cover (8) and said port (7), **characterized in that** said cover (8) has a substantially flat annular portion (8a), said annular portion (8a) abutting against a shoulder (7a) which is formed at said internal inlet of said port (7), in order to close the tank, a gasket (9) being interposed between said annular portion (8a) and said shoulder (7a) and being fixed to said shoulder (7a).

2. The closure device according to claim 1, **characterized in that** it comprises a torsion spring (10) for the elastic articulation of said cover (8) to said body (2), the elastic reaction of said spring (10) forcing said cover (8) on said gasket (9).

3. The closure device according to claims 1 and 2, **characterized in that** said body (2) comprises a first part (2a) and a second part (2b), which are mutually differently shaped and jointly connected, a first end portion (9a) of said gasket (9) being clamped between mating surfaces of said first part (2a) and said second part (2b).

4. The closure device according to one or more of the preceding claims, **characterized in that** it comprises means (11) for adjusting the mating between said cover (8) and said port (7), in order to compensate during assembly for any misalignments between said cover (8) and said port (7).

5. The closure device according to claim 4, **characterized in that** said adjustment means (11) comprise a seat which is articulated to said body (2) and is suitable for adjustable coupling, according to infinite configurations, with said cover (8), the fastening of said cover (8) on said seat, during assembly, compensating for any misalignments.

6. The closure device according to claim 5, **characterized in that** said adjustment means (11) comprise a bar (12), which is articulated at one of its ends to said body (2) and has a hole (12a) which constitutes said seat, at its other end, for the insertion of a stem (13) which supports said cover (8), a section (13a) of said stem (13) being cambered for mating with a respective end of said hole (12a) of said bar (12), the fastening of said stem (13) on said bar (12) producing the sliding of said cambered section (13a) on said respective end of said hole (12a), in order to compensate for any misalignments.

7. The closure device according to one or more of the preceding claims, **characterized in that** said stem (13) comprises a first axis of symmetry (B), said port (7) comprising a second axis of symmetry (C), said first axis of symmetry (B) and said second axis of symmetry (C), when said cover (8) is arranged in the closure position, being arranged in a substantially parallel configuration, so as to form a preset center distance, said center distance facilitating the mating of said cover (8) with said port (7), in order to close the tank.

8. The closure device according to one or more of the preceding claims, **characterized in that** it comprises means for controlling the pressure that can be detected in the chamber (4) of the tank, said control means being automatically activatable to restore the operating pressure within the chamber (4) if a first danger condition occurs in which the pressure that can be detected in the chamber (4) of the tank is higher than the operating pressure by at least one first preset increment and if a second danger condition occurs in which the pressure that can be detected in the chamber (4) of the tank is lower than the operating pressure by at least one first preset decrement.

9. The closure device according to claim 8, **characterized in that** on said body (2) there is a first through duct (14a), the outside environment being connected to the chamber (4) of the tank by means of said first through duct (14a), said control means comprising a double-acting control valve, which is normally arranged so as to close said first through duct (14a), the occurrence of one of said first and second danger conditions causing the opening of said control valve.

10. The closure device according to claim 8 and as an alternative to claim 9, **characterized in that** on said body (2) there are a first through duct (14a) and a second through duct (14b), each one of said through ducts (14a, 14b) connecting the chamber (4) of the tank to the outside environment, said control means comprising a first single-acting valve (15a) and a second single-acting valve (15b), both of which are normally arranged so as to close respectively said first through duct (14a) and said second through duct (14b), the occurrence of said first danger condition causing the opening of said first single-acting valve (15a), the occurrence of said second danger condition causing the opening of said second single-acting valve (15b).

11. The closure device according to one or more of the preceding claims, **characterized in that** it comprises safety means (16) which are adapted to restore the operating pressure within the chamber (4) of the tank and can be activated automatically in case of malfunction of said control means.

12. The closure device according to claim 11, **characterized in that** on said body there is a first additional duct (17) for connection between the outside environment and the chamber (4) of the tank, said safety means (16) comprising a double-acting safety valve, which is normally arranged so as to close said first additional duct (17), the opening of said safety valve being produced by a pressure of the chamber (4) of the tank which is higher than the operating pressure by at least one second preset increment and by a pressure of the chamber (4) of the tank which is lower than the operating pressure by at least one second preset decrement, said second preset increment and said second preset decrement being respectively greater than said first preset increment and said first preset decrement.

13. The closure device according to claim 11 and as an alternative to claim 12, **characterized in that** on said body (2) there is a first additional duct (17) for connection between the outside environment and the chamber (4) of the tank, said closure means (16) comprising a third single-acting valve, which is normally arranged so as to close said first additional duct (17), a pressure of the chamber (4) of the tank which is higher than the operating pressure by at least one second preset increment causing the opening of said third single-acting valve, said second preset increment being greater than said first preset increment.

14. The closure device according to one or more of the preceding claims, **characterized in that** said body (2) comprises a channel (18) which is arranged in series to said first through duct (14a) and leads to means for absorbing the pollutants contained in the vapors emitted by the fuel contained in the chamber (4) of the tank.

15. The closure device according to claim 14, **characterized in that** said absorption means comprise an activated-charcoal filter, said channel (18) leading to said filter.

16. The closure device according to one or more of the preceding claims, **characterized in that** it comprises a protrusion (19) which protrudes outward from said body (2) in order to support the nozzle (6) during the operations for filling the tank.

17. The closure device according to one or more of the preceding claims, **characterized in that** it comprises an anti-siphoning mesh (20) which is shorter than a standard mesh and is arranged inside said filler (3), the nozzle (6), supported by said protrusion (19), being only partially inserted in said filler (3) and therefore not interfering with the bottom of said mesh (20).

18. The closure device according to one or more of the preceding claims, **characterized in that** it comprises a dome (21), which can engage a respective protrusion (21a) in order to cover said body (2), said dome (21) having a block (22) for the insertion of a key in order to lock said dome (21) on said body (2).
